## Europäisches Patentamt
## European Patent Office
## Office européen des brevets

(11) Veröffentlichungsnummer: **0 235 654 B1**

# EUROPÄISCHE PATENTSCHRIFT

(45) Veröffentlichungstag der Patentschrift: **27.03.91**

(51) Int. Cl.⁵: **C01B 17/02, B01D 33/06**

(21) Anmeldenummer: **87102140.8**

(22) Anmeldetag: **16.02.87**

(54) **Verfahren und Vorrichtung zum Reinigen von verunreinigtem Schwefel.**

(30) Priorität: **04.03.86 DE 3606931**

(43) Veröffentlichungstag der Anmeldung:
**09.09.87 Patentblatt 87/37**

(45) Bekanntmachung des Hinweises auf die
Patenterteilung:
**27.03.91 Patentblatt 91/13**

(84) Benannte Vertragsstaaten:
**BE DE FR GB IT NL**

(56) Entgegenhaltungen:
**AT-B- 376 582        DE-A- 2 014 613
US-A- 2 149 373        US-A- 2 295 937
US-A- 3 313 034        US-A- 4 203 625**

(73) Patentinhaber: **Santrade Ltd.
Alpenquai 12 P.O. Box 321
CH-6002 Luzern(CH)**

(72) Erfinder: **Mathur, Krishna S.
4810-40 Avenue S.W.
Calgary Alberta(CA)**
Erfinder: **Werni, Ferdinand
Lessingstrasse 34
W-7056 Weinstadt(DE)**

(74) Vertreter: **Wilhelm, Hans-Herbert, Dr.-Ing. et al
Wilhelm & Dauster Patentanwälte Hospitalstrasse 8
W-7000 Stuttgart 1(DE)**

**Beschreibung**

Die Erfindung betrifft eine Vorrichtung zum Reinigen von verunreinigtem Schwefel, bei der zerkleinerte Schwefelstücke von einem Heizmedium geschmolzen und aus der so gebildeten Schmelze Verunreinigungen entfernt werden, mit einem bis zur Höhe einer Überlauföffnung (4, 14, 114) mit flüssigem Schwefel angefülltem Behälter, dem oberhalb des Pegels des Schwefelbades (5) eine Fördereinrichtung (6, 106) zur Zufuhr von Schwefel zugeordnet ist und der an nachgeschaltete Filtereinrichtungen anschließbar ist.

Zum Abbau des bei der Erdöl- und Erdgasraffinerie in großen Mengen anfallenden und in Blöken von Haushöhe gelagerten Schwefels ist es bekannt (US-A- 41 71 200 oder US-A- 42 03 625), die Schwefelblöcke entweder anzubohren und dampfdurchströmte Heizrohre zum Abschmelzen von Teilstücken einzusetzen oder mit fahrbaren Geräten mit daran angeordneten Heizeinrichtungen den festen Schwefel in den flüssigen Zustand zu versetzen, um ihn durch Rohre abzufördern und ihn erst später wieder in den festen Zustand umzuwandeln. Dieses Abbauverfahren wird deshalb vorgenommen, weil ein Abräumverfahren durch mechanische Geräte, wie Bagger o. dgl., wegen der zu starken Staubentwicklung nicht zulässig ist.

Es ist bei diesem Abbauvorgang von Schwefel auch bekannt geworden (Hamilton Tubular Sulphur Melter, veröffentlicht in Canadian Pulp and Paper Association, Montreal, Meeting vom 24. bis 26. Januar 1946), daß die Schmelzwärme durch den direkten Kontakt des Rohschwefels mit geheizten Oberflächen oder durch den bereits flüssig gewordenen Schwefel als Wärmeübertragungsmedium zugeführt wird, der sich (US-A- 41 71 200) nach einer gewissen Anlaufphase in flachen Pfannen bildet, die zum Auffangen des abgeschmolzenen Schwefels dienen.

In ähnlicher Weise ist auch versucht worden (Alberta sulphur symposium "Proceedings of sulphur 84" sulphur Development of Canada Page 418 ./. 420), verunreinigten Schwefel dadurch zu reinigen, daß kleingebrochene Schwefelstücke in einem Behälter gesammelt werden, dessen Boden trichterförmig ausgebildet und mit Heizeinrichtungen versehen ist, die in Kontakt mit den Schwefelstücken kommen. Auf diese Weise soll der abschmelzende Schwefel nach unten abfließen und nach dem Durchlaufen mehrerer hintereinander angeordneter Grob- und Feinfilter im gereinigten Zustand vorliegen. Einrichtungen ähnlicher Art (US-A- 21 49 373) sehen ein durch Dampf beheiztes zylindrisches Rohr zum Schmelzen der Schwefelstücke vor, das mit seiner Achse senkrecht über einem, ebenfalls beheizten Trichter angeordnet und nach unten durch einen verstellbaren Konus geschlossen ist. In dem Trichter, der oben einen Überlauf besitzt, wird der bereits geschmolzene Schwefel geläutert. Feine Restverunreinigungen werden unten am Trichter abgenommen. Solche Vorrichtungen weisen den Nachteil auf, daß sie im Gegensatz zum Abschmelzen von relativ reinem Schwefel schon nach verhältnismäßig kurzer Zeit unbrauchbar werden, weil sich zumindestens ein Teil der beim Schmelzvorgang vom Schwefel getrennten Verunreinigungen an den Heizeinrichtungen bzw. an dem Konus absetzt und dort je nach seinen Eigenschaften festsetzt und anbäckt. Dazu kommt, daß der Wasseranteil des Schwefels zwar im Bereich der Heizeinrichtungen verdampft, beim Aufsteigen in die kühleren Zonen des Schmelzbehälters bzw. des zylindrischen Rohres aber wieder kondensiert, so daß das Wasser mehrmals verdampft werden muß.

Schwefel besitzt bekanntlich eine sehr schlechte Wärmeleitfähigkeit, so daß verschmutzte Heizeinrichtungen schon nach relativ kurzer Zeit nicht mehr ausreichen, um den gewünschten Schmelzvorgang zum Zweck des Reinigens vornehmen zu können.

Dies gilt insbesondere dann, wenn Schwefel aus den Bereichen der vorher erwähnten Lagerblöcke abgebaut werden soll, die in der Gegend der Bodenoberfläche, oder sogar noch darunterliegen. Der hier im Schwefel enthaltene Verunreinigungsanteil ist zu groß, um für längere Zeit einen ungestörten Ablauf solcher bekannter Reinigungseinrichtungen zu gewährleisten. Ein Nachteil der bekannten Einrichtungen ist es daher, daß sie verhältnismäßig oft gereinigt und dabei außer Betrieb gesetzt werden müssen, so daß eine kontinuierliche Schwefelreinigung nicht möglich ist.

Dies gilt zwar nicht in gleichem Maß für eine andere bekannte Vorrichtung zum Gewinnen von Schwefel aus Mineralien (DE-A- 20 14 613), bei der in einem Autoklaven unter Druck stehendes Wasser auf Temperaturen oberhalb des Schmelzpunktes von Schwefel gebracht wird und als Heizmedium zum Schmelzen dient. Dort wird der nicht schwefelhaltige Mineralienanteil durch eine rotierende Siebtrommel aus dem Druckwasser und aus dem sich im Druckwasser aufgrund des spezifischen Gewichtes unten absetzenden Schwefel entfernt. Nachteilig ist hier aber der Aufwand, der zur Herstellung und zum Betrieb des unter Druck stehenden Behälters und zur Gewinnung des Schwefels aus einer dort vorgesehenen Raffinationszelle notwendig ist.

Der vorliegenden Erfindung liegt daher die Aufgabe zugrunde, eine Einrichtung der eingangs genannten Art so auszubilden, daß auch stark verunreinigter Schwefel mit gutem Wirkungsgrad gereinigt werden kann, ohne daß der Aufwand zu groß wird.

Zur Lösung dieser Aufgabe wird bei einer Vorrichtung der eigangs genannten Art vorgesehen, daß die Schwefelstücke unmittelbar in das als Heizmedium dienende Schwefelbad in Behälter gefördert werden und daß in das Schwefelbad Flächen eines mechanisch bewegten Körpers eintauschen, die einen Rühreffekt bewirken und grobe Verunreinigungen mitnehmen. Durch den Einsatz des Schwefelbades als Heizmedium zum Schmelzen der Schwefelstücke wird eine wesentlich bessere Wärmeübertragung erreicht, die auch nicht mit dem Nachteil des Verklebens oder sich Zusetzens von Heizeinrichtungen verbunden ist. Voraussetzung ist allerdings, daß das so geschaffene Schwefelbad eine genügende Tiefe aufweist, um die hereinfallenden Schwefelstücke voll in sich aufzunehmen und den Schwefel aufzuschmelzen. Aus diesem Schwefelbad lassen sich die Verunreinigungen auf mechanische Weise durch einen bewegten Körper verhältnismäßig leicht entfernen.

Die erfindungsgemäße Vorrichtung läßt sich in einfacher Weise zum Beispiel dadurch verwirklichen, daß der bewegte Körper eine rotierende Siebtrommel ist, die in dem Behälter so angeordnet ist, daß sie mit einem Teil ihres Umfanges in das Schwefelbad eintaucht. Werden die Schwefelstücke in das Innere dieser Siebtrommel gefördert, so kann der flüssige Schwefel nach außen austreten, während die Verunreinigungen innerhalb der Siebtrommel bleiben und daher Temperier- oder Heizeinrichtungen für den Schwefel nicht beeinflussen können. Vorteilhaft ist es bei einer solchen Einrichtung auch, wenn in den Behälter ständig flüssiger Schwefel mit entsprechender Temperatur zugeführt wird, so daß Heiz- oder Temperiereinrichtungen im Behälter selbst nicht unbedingt vorgesehen sein müssen. Diese können sich an einer anderen Stelle in einem Schwefelkreislauf befinden, wo der Schwefel auf die entsprechende Temperatur aufgeheizt und zum Behälter geführt wird.

Die neue Vorrichtung läßt sich aber auch vorteilhaft dadurch verwirklichen, daß als bewegter Körper die innere Wand einer sich drehenden, etwa zylindrisch gestalteten Trommel dient, die mit Förderschaufeln versehen ist und in der Art beispielsweise einer Betonmischmaschine den in ihrem Inneren befindlichen flüssigen Schwefel umrührt, dabei aber feste Verunreinigungen an ihrer Wand nach außen fördert, von wo aus sie dann beispielsweise über eine Ableitrinne nach außen gefördert werden können.

Weitere Vorteile und Merkmale der neuen Vorrichtungen gehen aus den folgenden Darstellungen und Beschreibungen von Ausführungsbeispielen erfindungsgemäßer Vorrichtungen hervor. Es zeigen:

Fig. 1    eine schematische Darstellung einer erfindungsgemäß aufgebauten Gesamtanlage zum Reinigen von verschmutztem Schwefel,

Fig. 2    die bei der Anlage der Fig. 1 verwendete rotierende Trommel in einem schematischen Längsschnitt,

Fig. 3    den Schnitt durch die Trommel der Fig. 2 längs der Linie III-III,

Fig. 4    den Schnitt durch die Trommel der Fig. 2 längs der Linie IV-IV,

Fig. 5    den Schnitt durch die Trommel der Fig. 2 längs der Linie V-V,

Fig. 6    eine andere Ausführungsform des Kernstückes der Reinigungseinrichtung wie es anstelle der rotierenden Trommel verwendet werden kann, in einem schematischen Längsschnitt,

Fig. 7    den Schnitt durch die Ausführungsform der Fig. 6 längs der Linie VII-VII,

Fig. 8    eine weitere Ausführungsform einer Reinigungseinrichtung in einem schematischen Längsschnitt und

Fig. 9    den Querschnitt durch die Einrichtung der Fig. 8 Längs der Linie IX-IX.

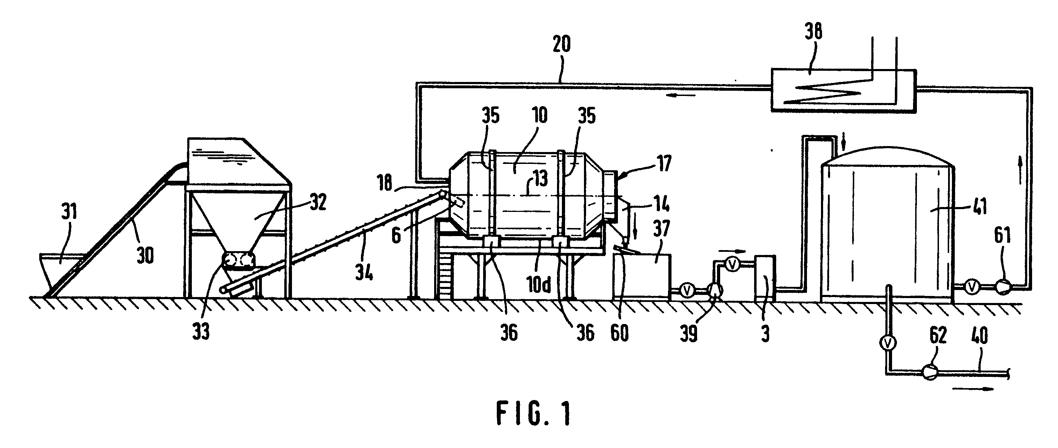

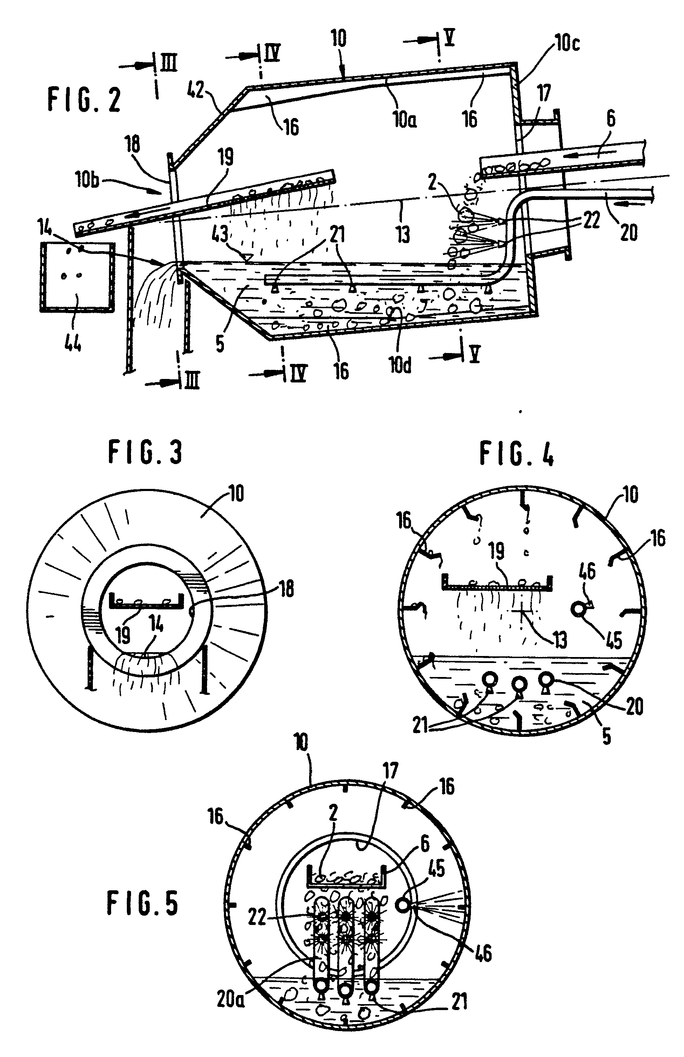

In der Fig. 1 ist schematisch eine Gesamtanlage gezeigt, mit der verunreinigter Schwefel gereinigt werden kann. Nicht dargestellt ist die Lagerstelle des Schwefels von der aus, beispielsweise vom Fuß eines Blockes oder aus dem Bereich unterhalb des Erdbodens, Schwefel in verunreinigter Form beispielsweise mit Erd- und sonstigen Schmutzeinlagerungen in groben Brocken einem Förderer (30) zugeleitet wird, wo er mit Hilfe eines Förderwagens (31) in einen Sammeltrichter (32) gebracht wird, der an seinem unteren Ende ein Zerkleinerungswerk (33) aufweist. Die am unteren Ende des Trichters (32) austretenden zerkleinerten Schwefelstücke werden anschließend von einem Förderband (34) zur linken Stirnseite (18) einer rotierenden Trommel (10) gebracht und dort über eine schräge Rutsche oder eine Förderrinne (6) in das Innere der Trommel (10) befördert. Die Trommel (10) selbst ist in nicht näher, weil bekannter Weise mit Führungsreifen (35) drehbar auf Lagern (36) gehalten und durch einen nicht gezeigten Antrieb in eine Rotation um ihre Achse (13) versetzbar. Die Lager (36) selbst können auf einem Wartungspodest angeordnet werden. Wie anhand der Fig. 2 bis 5 noch erläutert werden wird, werden innerhalb dieser rotierenden Trommel (10) die vom Förderer (34) angebrachten Schwefelstücke geschmolzen, grobe Verunreinigungen aus der Schmelze mechanisch entfernt und über den Überlauf (14) geschmolzener Schwefel nach außen gefördert. Dieser geschmolzene Schwefel durchläuft ein Sieb (60) und gelangt in den beheizten Auffangtank (37). Mit Hilfe einer Pumpe (39) wird der Schwefel durch einen Filter (3) in einen beheizten Lagertank (41) gefördert. Die für den Aufschmelzprozess notwendige Teilmenge flüssigen Schwefels wird mittels einer Pumpe (61) aus dem Lagertank (41) entnommen und durch einen Wärmetauscher (38) gefördert und auf eine Temperatur von etwa 145°C gebracht und durch die Zuführleitung (20) wieder zurück zur Stirnseite (18) der Trommel (10) und von dort in deren Inneres gefördert. Der für den Aufschmelzprozeß nicht benötigte Schwefel wird mittels einer Pumpe (62) aus dem Lagertank (41) entnommen und durch die Leitung (40) entweder direkt einer Schwefelverfestigungsanlage oder in einem beheizten Vorratstank gefördert.

Das Kernstück der Einrichtung der Fig. 1 ist die in den Fig. 2 bis 5 gezeigte rotierende Trommel (10), die etwa zylindrisch ausgebildet ist, im Bereich ihrer linken Stirnseite (10b) allerdings ähnlich einer Mischtrommel eine konisch verlaufende Wand (42) aufweist. Die Trommel (10) rotiert um die Achse (13), die leicht zur Horizontalen geneigt ist. Die Wand (42) mündet in die stirnseitige Öffnung (18), die daher im Bereich ihres unteren Umfanges eine Überlauföffnung (14) bildet für den flüssigen Schwefel, der durch die Leitung (20) in das Trommelinnere gefördert wurde und sich dort im unteren Trommelbereich bis zur Höhe (43) zu einem Schwefelbad (5) aufgestaut hat. Dieses Schwefelbad wird durch die Rotation der Trommel ständig in Bewegung gehalten. An den Innenwänden (10a) weist die Trommel (10) Förderschaufeln (16) auf, die zum konischen Bereich (42) hin größer werden, wie sich aus den Schnitten gemäß Fig. 4 und 5 und auch aus dem Schnittbild ergibt. Diese Förderschaufeln (16) erzeugen bei der Rotation der Trommel (10) auch eine Rührbewegung. Durch die rechte Stirnseite (10c) bzw. durch deren Öffnung (17) führt die Förderrinne (6) in das Innere der Trommel (10). Sie mündet in einem Bereich, der, von der Öffnung (17) aus gesehen, hinter der an der Eintrittsöffnung (17) nach unten abknickenden Zuführleitung (20) liegt, die sich nach unten in das Schwefelbad (5) herein erstreckt. In diesem Bereich besitzt die Leitung (20) Öffnungen (21), durch die der flüssige Schwefel ständig in das Bad (5) nachgefördert werden kann. Diese Schwefelzufuhr dient damit zur Zufuhr der notwendigen Schmelzenergie, die nicht durch in der Trommel angeordnete Heizeinrichtungen aufgebracht wird, sondern durch den Schwefel in flüssiger Form als Heizmedium selbst. Zugeführt wird die später zum Schmelzen benötigte Wärme durch die Heizeinrichtung (38), die aber nicht innerhalb der Trommel (10) sitzt.

Die Leitung (20) ist in ihrem abgebogenen Bereich (20a) außerdem mit Sprühdüsen (22) versehen, die so ausgelegt sind, daß sie die von der Zuführrinne (6) aus in das Innere der Trommel herunterfallenden Schwefelstücke (2) bereits in diesem Bereich mit flüssigem Schwefel besprühen und so schon teilweise zum Vorschmelzen ausgenützt werden können.

Im Bereich der breiteren Teile der Förderschaufeln (16) ragt durch die Öffnung (18) eine Ableitrinne (19) in das Innere der Trommel herein, die so angeordnet und ausgelegt ist, daß die von den Förderschaufeln (16) bei der Drehbewegung an der Wand (10a) hochgeförderten groben Verunreinigungen, wie anhand Fig. 4 zu erkennen ist, auf die Rinne (19) herunterfallen, von wo aus sie nach außen beispielsweise in einen Auffangbehälter (44) gelangen, der in Fig. 1 nicht gezeigt ist.

Zusätzlich können in das Innere der Trommel (10) noch von der Zuführleitung (20) abgezweigte Rohrleitungen (45) hereinragen, die nach außen gerichtete Sprühdüsen (46) aufweisen. Die von dort ausgehenden Strahlen flüssigen Schwefels sorgen für eine Reinigung der nach unten laufenden Förderschaufeln, die nach dem Eintauchen in das Schwefelbad (5) wieder dazu dienen, die Verunreinigungen nach oben in die Rinne (19) zu fördern.

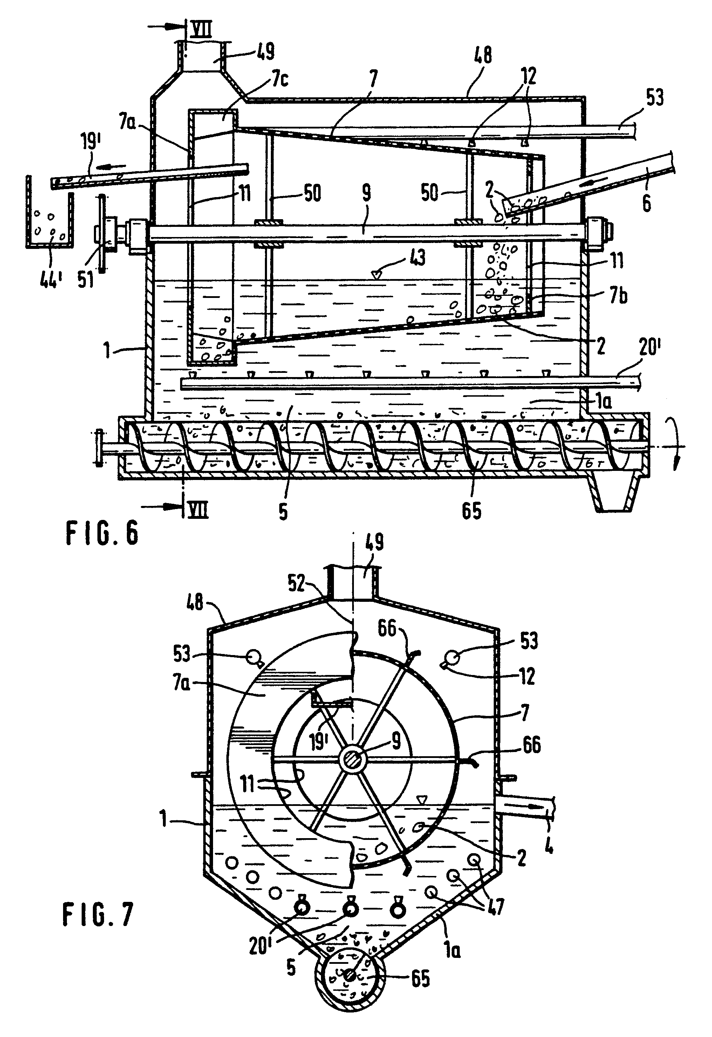

Die Einrichtung der Fig. 6 und 7 weicht von diesem Prinzip einer rotierenden Trommel ab, obgleich auch sie mit einem rotierenden Teil versehen ist. In den Fig. 6 und 7 ist ein feststehender Behälter (1) für das Schwefelbad (5) vorgesehen, der bis zu einem bestimmten Pegel (43) wiederum mit flüssigem Schwefel von einer Temperatur von etwa 145°C gefüllt ist. Dieser Schwefel wird dem Behälter durch eine Zuführleitung (20') zugeführt, die sich im Behälterinneren in mehrere Äste verzweigt. Zusätzlich kann in diesem Fall auch noch eine mit Dampf betriebene Heizspirale (47) vorgesehen werden, die zur Temperierung und Aufrechterhaltung der Temperatur im Schwefelbad (5) dient. Der untere Bereich der Behälterwände besitzt schräge Bodenteile (1a) und ist mit einem anschließenden Förderschneckengehäuse (65) versehen, damit die im Behälter (1) angesammelten Verunreinigungen leicht ausgetragen werden können. Etwa in der Höhe des Pegels (43) befindet sich ein Überlauf (4) an dem Behälter, der nach oben durch eine Haube (48) abgeschlossen ist, deren Absaugstutzen (49) beispielsweise an einen Absaugventilator angeschaltet werden kann, der schädliche Schwefeldämpfe ableitet. An dem Behälter (1) ist eine Welle (9) drehbar gelagert, an der über Speichen (50) eine Sieb- oder Polygontrommel (7) angebracht ist, die ebenfalls einen leicht konischen Mantel aufweist. Die Siebtrommel besitzt zwei stirnseitige Öffnungen (11), die die Achse (9) bis zu einem etwa radial umlaufenden und die Stirnseiten außen begrenzenden Ringrand (7a) bzw. (7b) bilden. Durch die rechte Öffnung (11) innerhalb des Randes (7b) führt die Zuführrinne (6) hindurch, auf der, ähnlich wie beim ersten Ausführungsbeispiel, Schwefelstücke (2) in das Innere der Siebtrommel gefördert werden. Die Siebtrommel ist so angeordnet, daß zumindestens ihr unterer Bereich in das Schwefelbad (5) eintaucht. Am größten Durchmesser der konischen Trommel ist zusätzlich ein Sammelkanal (7a) angebracht in dem sich Verunreinigungen, die sich von dem schmelzenden Schwefel lösen, ansammeln und mittels einer nicht näher gezeigten Schöpfvorrichtung, hochgefördert und auf die Austragsrinne (19') herunterfallen, von wo sie nach außen in einen Auffangbehälter (44') gelangen. Die Siebtrommel (7) wird durch einen nur schematisch angedeuteten Antrieb (51) in Rotation versetzt, so daß die von den Schwefelstücken (2), sobald diese das Innere der Siebtrommel (7) erreicht haben, abschmelzenden und sich trennenden Verunreinigungen innerhalb der Siebtrommel (7) zum linken Rand (7a) gefördert werden. In dem Förderschneckengehäuse (65) sammelt sich daher nur der Teil der Verunreinigungen, der durch die Öffnungen in der Siebtrommel (7) herausfällt.

Im Bereich oberhalb der rotierenden Siebtrommel (7) sind symmetrisch zur Mittellängsachse (52) des Behälters (1) Zuführleitungen (53) für flüssigen Schwefel vorgesehen, die sich etwa über die Länge der Siebtrommel parallel zu deren Achse (9) erstrecken. Diese Zuführleitungen (53) sind mit Sprühdüsen (12) versehen, von denen aus Strahlen flüssigen Schwefels zum Inneren der Siebtrommel hin gerichtet werden, mit denen etwa noch in den Öffnungen der Siebtrommel (7) hängende Verunreinigungen in das Innere zurückgewaschen werden. Diese Verunreinigungen können, wie ausgeführt, dann am linken Ende der Siebtrommel (7) entnommen werden. An der Außenseite der Sieb- oder Polygontrommel sind Schaufeln (66) angebracht, damit der flüssige Schwefel im Behälter (1) in Bewegung gebracht wird, um einerseits bessere Wärmeübergänge zu erreichen und andererseits wird dadurch eine schnelle Verschmutzung der Heizspiralen (47) verhindert.

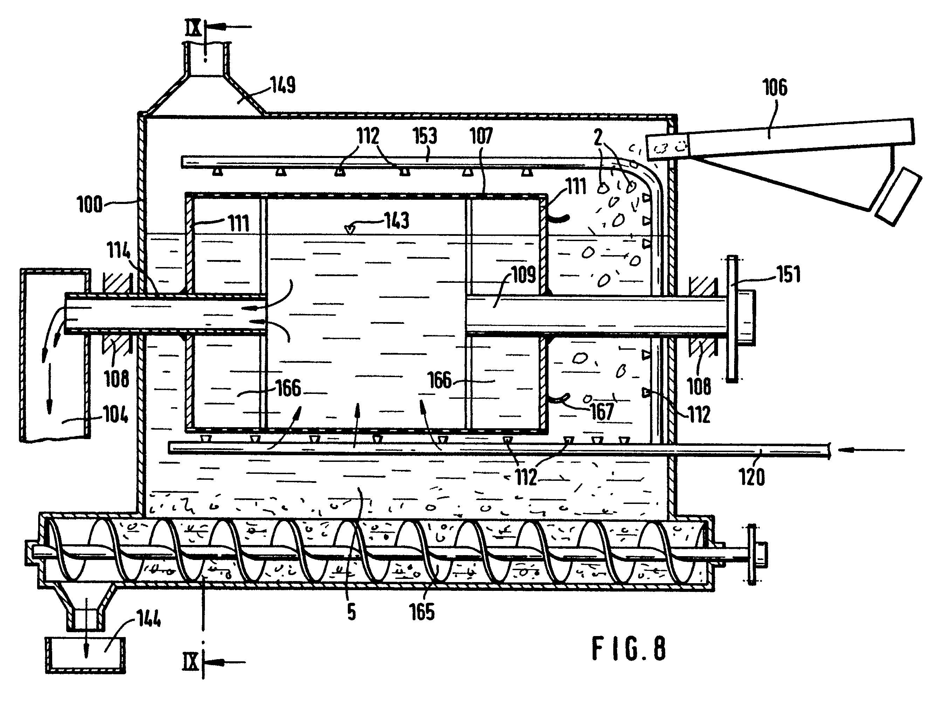

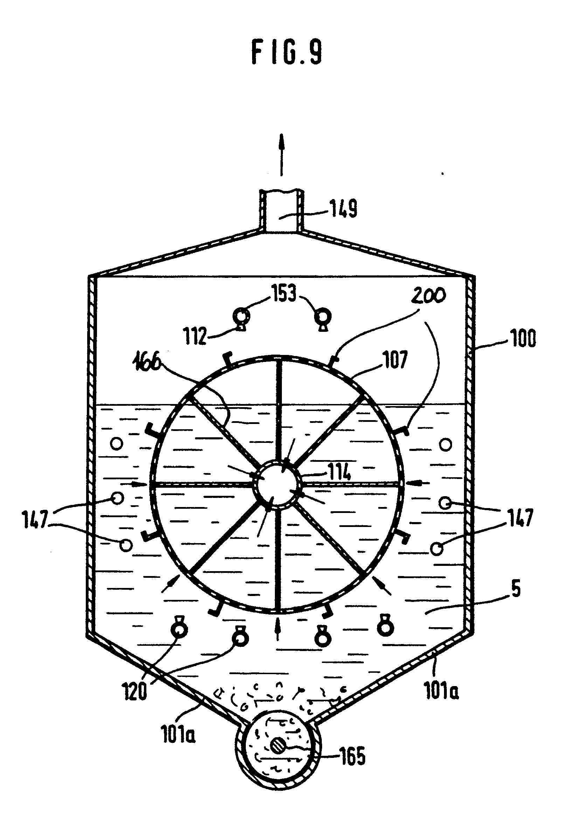

In den Figuren 8 und 9 ist eine weitere Variante der erfindungsgemäßen Reinigungseinrichtung gezeigt, die an Stelle der Einrichtungen der Figuren 6, 7 bzw. 2 einsetzbar ist. Bei dieser Ausführungsform ist innerhalb eines ortsfesten Behälters (100) ähnlich wie bei der Ausführungsform der Figuren 6 und 7 eine Siebtrommel (107) drehbar in den Lagern (108) gelagert, die von einem Antrieb (151) aus in Drehbewegungen versetzt werden kann. Diese Siebtrommel (107) kann zylindrisch oder auch als eine Polygonsiebtrommel ausgebildet sein. Sie weist an ihren beiden Stirnseiten (111) geschlossene Wände auf, die sich nach innen in etwa radial verlaufende Rührflügel (166) fortsetzen. Der Mantel der Siebtrommel (107) ist durchlässig. Zur Lagerung der Siebtrommel (107) auf der rechten Seite ist ein Wellenzapfen (109) vorgesehen. Die Lagerung auf der linken Seite dagegen übernimmt ein Rohr (114), das im Gegensatz zu der Ausführungsform der Figur 6 und 7 den Überlauf aus dem Inneren des Behälters (100) darstellt, der ansonsten ringsum weitgehend geschlossene Wände aufweist und lediglich mit einem Abzug (149) für die sich bildenden Gase versehen ist. Der verunreinigte Schwefel wird bei dieser Ausführungsform über die Zuführrinne (106) zugeführt und fällt in das Innere des Behälters (100) herein und zwar in den Bereich außerhalb der Siebtrommel (107). Die Schwefelstücke (2) fallen dabei in ein innerhalb des Behälters (100) bis zur Pegelmarke (143) etwa vorhandenes Schwefelbad und werden durch Wärmeübertragung durch dieses Schwefelbad -ebenso wie bei den anderen Ausführungsformen- abgeschmolzen. Die Verunreinigungen gelangen in den Bereich des trichterförmig ausgebildeten Bodens, wo sie an den schrägen Bodenwänden (101a) nach unten in die Austragförderschnecke (165) hereinrutschen und von dort in einen Sammelbehälter (144) oder dergleichen hereingefördert werden. Auch in diesem Fall wird dem Behälterinneren flüssiger Schwefel von circa 145°C durch die Zuführleitung (120) zugeführt, der dann durch Düsen nach oben in Richtung auf die rotierende Siebtrommel (107) abgesprüht wird. Ähnlich wie in Figur 6 sind auch oberhalb der Siebtrommel (107) Zuführrohre (153) für flüssigen Schwefel vorgesehen, die in diesem Fall von der Zuführleitung (120) nach oben abgezweigt sind. Sowohl von dem nach oben abzweigenden Rohrleitungsteil, als auch von dem etwa parallel zum Mantel der Siebtrommel (107) verlaufenden Rohrteil der Leitung (153) aus sind jeweils zur Siebtrommel (107) hin gerichtete Düsen (112) vorgesehen, durch der der flüssige Schwefel in Richtung auf die Siebtrommel bzw. in Richtung auf die von oben in das Bad hereinfallenden und im Bad untersinkenden Schwefelstücke (2) gerichtet werden kann. Der gereinigte Schwefel wird aus dem Inneren der Siebtrommel (107) durch das Rohrstück (114) in die Leitung (104) geführt. Das Rohrstück (114) stellt somit den Überlauf aus dem Behälter (100) dar.

Neben den inneren Rührarmen (166) ist die Siebtrommel (107) auf ihrem Umfang mit schaufelartigen Rührelementen (200) und auf ihrer nach rechts, gegebenenfalls auch nach links, gerichteten Stirnseite (111) mit weiteren Rührschaufeln (167) versehen, die im Bereich der herabsinkenden und schmelzenden Schwefelstücke (2) für eine ausreichende Umwälzung in dem Schwefelbad zum Zweck einer besseren Wärmeübertragung sorgen. Die Schaufeln (167) und die Rührelemente (200) unterstützen daher die ebenfalls in diesem Bereich hereingerichteten Sprühdüsen (112).

Das neue Verfahren kann nicht nur mit den gezeigten Vorrichtungen durchgeführt werden. Denkbar wäre es auch, anstelle von rotierenden Siebtrommel beispielsweise ein umlaufendes Förderband in ein Schwefelbad eintauchen zu lassen. Entscheidend ist in allen Fällen aber, daß die Schmelzwärme für die Schwefelstücke durch ein Schwefelbad mit entsprechender Temperatur aufgebracht wird, aus dem dann die abschwimmenden oder untersinkenden Verunreinigungen auf mechanische Weise entfernt werden können, ehe der flüssige Schwefel nach Verlassen des Überlaufes den Filtervorrichtungen zugeführt wird. Dieses neue Verfahren weist den Vorteil auf, daß keine Heizeinrichtungen in dem Bereich vorgesehen sein müssen, in den die verunreinigten Schwefelstücke gelangen. Eine Beeinträchtigung der Heizeinrichtungen und eine Beeinträchtigung des Wärmeüberganges durch Verunreinigungen ist daher nicht zu befürchten.

**Ansprüche**

1. Vorrichtung zum Reinigen von verunreinigtem Schwefel, bei der zerkleinerte Schwefelstücke von einem Heizmedium geschmolzen und aus der so gebildeten Schmelze Verunreinigungen entfernt werden, mit einem bis zur Höhe einer Überlauföffnung (4, 14, 114) mit flüssigem Schwefel angefülltem Behälter, dem oberhalb des Pegels des Schwefelbades (5) eine Fördereinrichtung (6, 106) zur Zufuhr von Schwefel zugeordnet ist und der an nachgeschaltete Filtereinrichtungen anschließbar ist, dadurch gekennzeichnet, daß die Schwefelstücke unmittelbar in das als Heizmedium dienende Schwefelbad (5) im Behälter (1, 10, 100) gefördert werden und daß in das Schwefelbad Flächen eines mechanisch bewegten Körpers (7, 10a, 16, 107) eintauchen, die einen Rühreffekt bewirken und grobe Verunreinigungen mitnehmen.

2. Vorrichtung nach Anspruch 1, dadurch gekennzeichnet, daß der bewegte Körper eine rotierende Siebtrommel (7, 107) ist, die in dem Behälter (1) so angeordnet ist, daß sie mit einem Teil ihres Umfanges in das Schwefelbad (5) eintaucht.

3. Vorrichtung nach Anspruch 2, dadurch gekennzeichnet, daß die Fördereinrichtung (6) im Inneren der Siebtrommel (7) mündet.

4. Vorrichtung nach den Ansprüchen 2 und 3, dadurch gekennzeichnet, daß die Siebtrommel (7) an ihren Stirnseiten mit je einem in etwa radial verlaufenden Abschlußring (7a, 7b) versehen ist, der eine zentral um die Achse (9) der Siebtrommel (7) verlaufende Öffnung (11) umgibt.

5. Vorrichtung nach Anspruch 4, dadurch gekennzeichnet, daß die Fördereinrichtung aus einer in eine der beiden stirnseitigen Öffnungen (11) mündende Förderrinne (6) besteht.

6. Vorrichtung nach Anspruch 2, dadurch gekennzeichnet, daß außerhalb des oberen Umfangbereiches der Siebtrommel (7) Sprühdüsen (12) für flüssigen Schwefel angeordnet sind, deren Sprühstrahlen radial auf das Innere der Siebtrommel (7) gerichtet sind.

7. Vorrichtung nach Anspruch 1, dadurch gekennzeichnet, daß der Behälter zur Aufnahme des Schwefelbades eine sich um eine Achse (13) drehende hohle Trommel (10) ist, daß die Innenwand (10a) dieser Trommel (10) mit Förderschaufeln (16) o.dgl. versehen ist und daß diese so bestückte Innenwand (10a) die Flächen des bewegten Körpers bildet.

8. Vorrichtung nach den Ansprüchen 7, dadurch gekennzeichnet, daß die Trommel (10) an jeder ihrer Stirnseiten (10b, 10c) zentral um die Achse (13) herum angeordnete Öffnungen (17, 18) aufweist.

9. Vorrichtung nach Anspruch 8, dadurch gekennzeichnet, daß durch die stirnseitige Öffnung (17) die Fördereinrichtung (6) und durch die Öffnung (18) eine nach außen führende Ableitrinne (19) für die Verunreinigungen greift, die so im Bereich der Förderschaufeln (16) angeordnet ist, daß von diesen mitgeförderte Verunreinigungen auf die Ableitrinne (19) herabfallen.

10. Vorrichtung nach Anspruch 8, dadurch gekennzeichnet, daß die Achse (13) der Trommel (10) schräg zur Horizontalen angeordnet ist und daß die tiefer gelegene stirnseitige Öffnung (18) mit ihrem unteren Rand die Überlauföffnung (14) bildet.

11. Vorrichtung nach Anspruch 10, dadurch gekennzeichnet, daß durch die stirnseitige Öffnung (17) eine Zuführleitung (20) für flüssigen Schwefel führt.

12. Vorrichtung nach Anspruch 11, dadurch gekennzeichnet, daß die Zuführleitung (20) etwa zentral in die Trommel (10) eintritt, in das Schwefelbad (5) eintaucht und dort auf die Trommellänge verteilte Austrittsöffnungen (21) aufweist.

13. Vorrichtung nach Anspruch 12, dadurch gekennzeichnet, daß in dem abgebogenen Bereich (20a) der Zuführleitung (20) zum Trommelinneren gerichtete Sprühdüsen (22) so angeordnet sind, daß sie unterhalb und - von der stirnseitigen Öffnung (17) aus gesehen - vor dem Ende der Fördereinrichtung (6) liegen.

14. Vorrichtung nach Anspruch 13, dadurch gekennzeichnet, daß die Fördereinrichtung eine Förderrinne (6) ist.

15. Vorrichtung nach Anspruch 1 und 2, dadurch gekennzeichnet, daß die Fördereinrichtung (106) außerhalb der Siebtrommel (107) mündet und daß diese an einer ihrer Stirnseiten (111) mit dem Überlauf (114) versehen ist.

16. Vorrichtung nach Anspruch 15, dadurch gekennzeichnet, daß der Überlauf als ein Rohrstutzen (114) ausgebildet ist, der konzentrisch zur Siebtrommel (107) angeordnet ist und als Lagerzapfen dient, der in einem Lager (118) geführt ist.

17. Vorrichtung nach einem der Ansprüche 1, 2 oder 15, dadurch gekennzeichnet, daß der Behälter (1, 100) im Bereich seines Bodens mit schräg verlaufenden Bodenteilen (1a, 100a) versehen ist, die zu einem Förderrinnengehäuse (165, 65) mit trichterförmigen Querschnitt zusammenlaufen, in dem eine Förderschnecke läuft.

18. Vorrichtung nach Anspruch 17, dadurch gekennzeichnet, daß die Förderschnecke (65, 165) in etwa parallel zur Achse der Siebtrommel (7, 107) verläuft.

## Claims

1. An apparatus for an apparatus for the purification of contaminated sulphur in which comminuted sulphur pieces are melted by a heating medium, impurities being removed from the molten mass which is thus formed, the apparatus comprising a container which is filled with liquid sulphur to the level of an overflow aperture (4, 14, 114) and with which a conveyor means (6, 106) for supplying sulphur is associated, being situated above the level of the sulphur bath (5), being adapted to be connected to filter means on the downstream side, characterised in that the pieces of sulphur be passed directly into the sulphur bath (5) in the container (1, 10, 100) which serves as the heating medium and that surfaces of a mechanically propelled body (7, 10a, 16, 107) dip into the sulphur bath and produce an agitating effect, entraining coarse impurities with them.

2. An apparatus according to Claim 1, characterised in that the moving body is a rotating screening drum (7, 107) which is so disposed in the container (1) that a part of its periphery is plunged into the sulphur bath (5).

3. An apparatus according to Claim 2, characterised in that the conveyor means (6) has its mouth in the interior of the screening drum (7).

4. An apparatus according to Claims 2 and 3, characterised in that at its ends the screening drum (7) is in each case provided with a substantially radially extending closure ring (7a, 7b) surrounding an aperture (11) extending centrally about the axis (9) of the screening drum (7).

5. An apparatus according to Claim 4, characterised in that the conveyor means consist of a conveyor channel (6) discharging into one of the two end apertures (11).

6. An apparatus according to Claim 2, characterised in that outside the upper peripheral region of the screening drum (7) there are spray jets (12) for liquid sulphur, from which the sprayed streams are directed radially onto the interior of the screening drum (7).

7. An apparatus according to Claim 1, characterised in that the container for holding the sulphur bath is a hollow drum (10) rotating about an axis (13) and in that the inner wall (10a) of this drum (10) is provided with conveyor blades (16) or the like and in that the inner wall (10a) which is so equipped forms the surfaces of the moving body.

8. An apparatus according to Claim 7, characterised in that the drum (10) has at each of its ends (10b, 10c) apertures (17, 18) disposed centrally around the axis (13).

9. An apparatus according to Claim 8, characterised in that the conveyor means (6) engages through the end aperture (17) while an outwardly extending discharge channel (9) for carrying away impurities engages through the aperture (18) and is so disposed in the region of the conveyor blades (16) that impurities entrained by these latter fall onto the discharge channel (19).

**10.** An apparatus according to Claim 8, characterised in that the axis (13) of the drum (10) is disposed obliquely to the horizontal and in that the bottom edge of the aperture (13) which is situated lower down forms the overflow aperture (14).

**11.** An apparatus according to Claim 10, characterised in that a feed line (20) carrying liquid sulphur extends through the end aperture (17).

**12.** An apparatus according to Claim 11, characterised in that the feed line (20) enters the drum (10) substantially centrally, plunges into the sulphur bath (5) where it has outlet orifices (21) distributed over the length of the drum.

**13.** An apparatus according to Claim 12, characterised in that in the bent-over portion (20a) of the feed line (20) spray jets (22) directed at the interior of the drum are so disposed that they are situated below and - viewed from the end aperture (17) - upstream of the end of the conveyor means (6).

**14.** An apparatus according to Claim 13, characterised in that the conveyor means is a conveyor channel (6).

**15.** An apparatus according to Claim 1 and 2, characterised in that the conveyor means (106) discharges outside the screening drum (107) and in that this latter is provided at one of its ends (111) with the overflow (114).

**16.** An apparatus according to Claim 15, characterised in that the overflow is constructed as a portion of pipe (114) disposed concentrically with the screening drum (107) and serving as a bearing journal which is guided in a bearing (118).

**17.** An apparatus according to one of Claims 1, 2 or 15, characterised in that the container (1, 100) is in the region of its bottom provided with obliquely extending bottom parts (1a, 100a) which converge to form a conveyor channel housing (165, 65) of funnel-shaped cross-section in which a conveyor worm runs.

**18.** An apparatus according to Claim 17, characterised in that the conveyor worm (65, 165) extends substantially parallel with the axis of the screening drum (7, 107).

**Revendications**

**1.** Dispositif pour épurer du soufre impur, dans lequel des morceaux de soufre fragmentés sont fondus à l'aide d'un milieu chauffant et des impuretés sont éliminées de la masse fondue ainsi formée, et comportant un récipient rempli par du soufre liquide jusqu'au niveau d'une ouverture de trop-plein (4,14,114) et auquel est associé, au-dessus du niveau du bain de soufre (5), un dispositif d'entraînement (6,106) servant à amener le soufre et qui peut être raccordé à des dispositifs de filtrage installés en aval, caractérisé en ce que les morceaux de soufre sont entraînés de manière à pénétrer directement dans le bain de soufre (5), utilisé comme milieu chauffant, dans le récipient (1,10,100) et que dans le bain de soufre sont immergées des surfaces d'un corps (7,10a,16,116) déplacé mécaniquement, qui réalisent un effet d'agitation et entraînent des impuretés grossières.

**2.** Dispositif selon la revendication 1, caractérisé en ce que le corps mobile est un tambour filtrant rotatif (7,107), qui est disposé dans le récipient (1) de manière à plonger par une partie de sa périphérie dans le bain de soufre (5).

**3.** Dispositif selon la revendication 2, caractérisé en ce que le dispositif d'entraînement (6) débouche à l'intérieur du tambour filtrant (7).

**4.** Dispositif selon les revendications 2 et 3, caractérisé en ce que le tambour filtrant comporte, sur ses faces frontales, des bagues respectives de fermeture (7a,7b), approximativement radiales, qui enserrent une ouverture (11) installée en position centrée sur l'axe (9) du tambour filtrant (7).

**5.** Dispositif selon la revendication 4, caractérisé en ce que le dispositif d'entraînement est constitué par une goulotte d'entraînement (6), qui débouche dans l'une des deux ouvertures frontales (11).

**6.** Dispositif selon la revendication 2, caractérisé en ce qu'à l'extérieur de la partie circonférentielle supérieure du tambour filtrant (16) sont disposées des buses de pulvérisation (12) pour le soufre liquide, dont les jets de pulvérisation sont dirigés radialement vers l'intérieur du tambour filtrant (7).

**7.** Dispositif selon la revendication 1, caractérisé en ce que le récipient servant à recevoir le bain de soufre est un tambour creux (10), qui tourne autour d'un axe (13), que la paroi intérieure (10a) de ce tambour (10) comporte des pales d'entraînement (16) ou analogues et que cette paroi intérieure (10a) ainsi équipée forme les surfaces du corps mobile.

8. Dispositif selon la revendication 7, caractérisé en ce que le tambour (10) comporte, sur chacune de ses faces frontales (10b,10c), des ouvertures (17,18) installées en position centrée par rapport à l'axe (13).

9. Dispositif selon la revendication 8, caractérisé en ce que le dispositif d'entraînement (6) pénètre dans l'ouverture frontale (17) et que dans l'ouverture (18) pénètre une goulotte (19) d'évacuation des impuretés, qui débouche à l'extérieur et est disposée au voisinage des pales d'entraînement (16) de manière que des impuretés entraînées par ces pales tombent sur la goulotte d'évacuation (19).

10. Dispositif selon la revendication 8, caractérisé en ce que l'axe (13) du tambour (10) est disposé obliquement par rapport à l'horizontale et que l'ouverture frontale plus basse (18) forme, par son bord inférieur, l'ouverture de trop-plein (14).

11. Dispositif selon la revendication 10, caractérisé en ce qu'une canalisation (20) d'amenée du soufre liquide pénètre dans l'ouverture frontale (17).

12. Dispositif selon la revendication 11, caractérisé en ce que la canalisation d'amenée (20) pénètre dans une position approximativement centrée dans le tambour (10), pénètre dans le bain de soufre (5) et comporte, à l'intérieur de ce bain, des ouvertures de sortie (21) réparties sur sa longueur.

13. Dispositif selon la revendication 12, caractérisé en ce que des buses de pulvérisation (22) dirigées vers l'intérieur du tambour sont disposées dans la zone coudée (20a) de la canalisation d'amenée (20) de manière à se trouver au-dessous et -lorsqu'on regarde à partir de l'ouverture frontale (17) -en avant de l'extrémité du dispositif d'entrainement (6).

14. Dispositif selon la revendication 13, caractérisé en ce que le dispositif d'entraînement est une goulotte d'entraînement (6).

15. Dispositif selon les revendications 1 et 2, caractérisé en ce que le dispositif d'entraînement (106) débouche à l'extérieur du tambour filtrant (107) et que ce dernier comporte le trop-plein (114), sur l'une de ses faces frontales (111).

16. Dispositif selon la revendication 15, caractérisé en ce que le trop-plein est réalisé sous la forme d'un embout tubulaire (114) qui est monté concentriquement par rapport au tambour filtrant (107) et est réalisé sous la forme d'un tourillon guidé dans un palier (118).

17. Dispositif selon l'une des revendcations 1,2 ou 15, caractérisé en ce que le récipient (1/100) comporte, au niveau de son fond, des éléments de fond obliques (1a,100a), qui convergent, avec une section transversale en forme de trémie en direction d'un logement (165,65) de la goulotte d'entraînement, dans lequel s'étend une vis convoyeuse.

18. Dispositif selon la revendication 17, caractérisé en ce que la vis convoyeuse (65,165) est approximativement parallèle à l'axe du tambour filtrant (7,107).

FIG. 1

FIG. 2

FIG. 3

FIG. 4

FIG. 5

FIG. 6

FIG. 7

FIG. 8

EP 0 235 654 B1

FIG.9